# EUROPÄISCHE PATENTSCHRIFT

(11) **EP 3 564 046 B1**
(45) Veröffentlichungstag und Bekanntmachung des Hinweises auf die Patenterteilung: **17.03.2021**
(21) Anmeldenummer: 19167725.1
(22) Anmeldetag: 08.04.2019
(51) Int. Cl.: B60C 11/01

(54) **FAHRZEUGLUFTREIFEN**
PNEUMATIC TYRE
PNEUMATIQUES DE VÉHICULE

(30) Priorität: 04.05.2018 DE 102018206913
(43) Veröffentlichungstag der Anmeldung: 06.11.2019
(73) Patentinhaber: Continental Reifen Deutschland GmbH, 30165 Hannover (DE)
(72) Erfinder: Strübel, Christian, 30165 Hannover (DE); Marschler, Christian, 30165 Hannover (DE); Klucka, Jiri, 30165 Hannover (DE)
(74) Vertreter: Continental Corporation

(56) Entgegenhaltungen:
- EP-A1- 2 527 163
- EP-A1- 2 602 125
- EP-A1- 2 628 612
- FR-A1- 2 617 096
- US-A- 4 662 416
- US-A- 5 151 139

## Beschreibung

Die Erfindung betrifft einen Fahrzeugluftreifen für PKW in Radialbauart mit einem Laufstreifen und mit einer an dem Übergang zur Reifenseitenwand angeordneten Reifenschulter, wobei der Laufstreifen und die Reifenschulter eine am montierten und auf Nenndruck aufgepumpten Fahrzeugluftreifen zu messende Außenkontur aufweisen und mit einer Breite des Laufstreifens, welche TW45 genannt wird und welche sich zwischen zwei Punkten P_{TW} erstreckt, wobei jeder dieser Punkte P_{TW} der Schnittpunkt einer unter 45° zur Radialen an der Schulteraußenseite verlaufenden Tangente mit einer in Verlängerung der Außenkontur des Laufstreifens verlaufenden Kurve ist.

Ein derartiger Fahrzeugluftreifen ist beispielsweise aus der DE10 2009 026 094 oder der EP 252 71 63 B1 bekannt. Die Außenkontur von Laufstreifen und Schulter von PKW-Reifen sind dem Fachmann hinreichend bekannt. Die Punkte P_{TW}, zwischen welchen sich die Breite des Laufstreifens bemisst, liegen außerhalb der Außenkontur dieser PKW-Reifen des Standes der Technik. Die Außenkontur von Laufstreifen und Schulter in Richtung Reifenseitenwand ist immer konvex.

Aus der US 4 662 416 A ist ein PKW-Reifen bekannt, welcher gute Handlingeigenschaften bei Kurvenfahrt ("cornering stability") aufweisen soll. Der Reifen weist definierte Breiten- und Höhenverhältnisse auf. Eines dieser Verhältnisse betrifft die Relation der Reifenquerschnittshöhe h zu einer Höhe h_{w}, welche zwischen der Wulstbasis und der breitesten Stelle des Reifens sowie in radialer Richtung gemessen ist. In Verlängerung des der Außenkontur des Laufstreifens verläuft eine die Außenkontur der Reifenschulter bildende Kurve.

Ferner offenbart die EP 2 602 125 A1 einen Reifen mit einer definierten Außenkontur. Die Außenkontur der Seitenwände umfasst einen an die Außenkontur des Laufstreifens anschließenden konkaven Konturabschnitt und einen an diesen anschließenden konvexen Konturabschnitt. Der konkave Konturabschnitt ist derart ausgeführt, dass der Laufstreifen an seinen axial äußeren Enden jeweils eine im Querschnitt dreieckförmige, den konkaven Konturabschnitt axial außenseitig überragende, schmale Gummirippe aufweist.

Die Breite des Laufstreifens wird über TW45 definiert, mit 70% NW ≤ TW45 ≤ 95% NW, wobei NW die Nennbreite des Reifens ist. Bei einem Reifen der Dimension 205/55R16 ist der vorderste Wert, die 205, die Nennbreite.
Die Reifenschulter hat eine definierte Erstreckung von 80% TW45bis zur Seitenwand und ist hiernach zum Teil von der Breite des Laufstreifens TW45 mit umfasst.
Die Reifenseitenwand beginnt gemäß Definition an der Formentrennlinie von Formsegment und Seitenwandschale der Vulkanisierform, welche am vulkanisierten Reifen sichtbar ist und sich die Seitenwand des Reifens entlang bis zum Wulst erstreckt.

Der Rollwiderstand von Fahrzeugluftreifen ist eine wesentliche Eigenschaft des Reifens.

Der Erfindung liegt die Aufgabe zu Grunde, einen Fahrzeugluftreifen der eingangs genannten Art derart auszuführen, dass dieser in seinem Rollwiderstand unter Beibehaltung seiner sonstigen Eigenschaften verbessert ist.

Gelöst wird die gestellte Aufgabe erfindungsgemäß dadurch, dass die in Verlängerung der Außenkontur des Laufstreifens verlaufenden Kurve die Außenkontur der Reifenschulter bildet und bis zum Punkt P_{TW} reicht und von dort in Richtung Reifenseitenwand zunächst in einen ausgehend vom Punkt P_{TW} komplett axial außerhalb des Punktes P_{TW} verlaufenden, konkaven Konturabschnitt übergeht, welcher durch einen Kreisbogenabschnitt mit einem Radius in einem Bereich von 8-25 mm gebildet ist und welcher anschließend tangential an die konvexe Außenkontur der Reifenschulter anschließt.

Ein gemäß der Erfindung ausgeführter Fahrzeugluftreifen weist eine breitere reale Bodenaufstandsfläche auf, weil die mit der Fahrbahnoberfläche in Berührung kommende Außenkontur von Laufstreifen und Schulter bis in die Punkte P_{TW} reicht. Es ist eine geringere Radialkraft pro Flächeneinheit der Bodenaufstandsfläche bzw. geringere Druckmaxima und Druckunterschiede in der Bodenaufstandsfläche erhalten, wodurch der Rollwiderstand positiv beeinflusst ist. Die übrigen Eigenschaften des Reifens sind nicht verändert.

Die Außenkontur der Reifenschulter weist vom Punkt P_{TW} in Richtung Reifenseitenwand zwei gegenläufig gekrümmte Radien auf: an den Punkt P_{TW} anschließend einen konkav gekrümmten Radius, welcher tangential in den üblichen konvex gekrümmten Radius übergeht.

Der konkav gekrümmte Radius erzeugt aufgrund seiner Auslegung nie einen Hinterschnitt. Der konkave Radius erzeugt eine Volumenkonstanz in Bezug auf das in diesem Bereich angeordnete Kautschukmaterial im Vergleich zu Reifen mit ausschließlich konvex gekrümmter Schulter. Denn das zusätzliche Kautschukvolumen, welches für die breitere Bodenaufstandsfläche des Laufstreifens benötigt wird, wird durch die konkave Außenkontur im Bereich der Schulter weggelassen und somit neutralisiert.

Erfindungsgemäß ist der konkave Konturabschnitt der Reifenschulter durch einen Kreisbogenabschnitt mit einem Radius in einem Bereich von 8 - 25 mm gebildet. Hierdurch ist der Übergang vom Laufstreifen auf die Seitenwand nicht zu steil oder zu flach, wodurch neben dem Rollwiderstand auch die Belastung optimiert wird.

In einer bevorzugten Ausführung der Erfindung ist im Punkt P_{TW} ein konvexer Kreisbogenabschnitt mit einem Radius in einem Bereich von 1-3 mm ausgebildet. Die durch diesen konvexen Radius erzeugte Rundung ist für den lokalen Abrieb vorteilhaft, da ein Radius sich weniger abreibt als eine Kante. Zudem ist die Entformung des Fahrzeugreifens nach der Vulkanisation erleichtert.

Weitere Merkmale, Vorteile und Einzelheiten der Erfindung werden anhand der Zeichnungen, die ein schematisches Ausführungsbeispiel darstellen, näher beschrieben. Dabei zeigen die
Fig. 1 einen hälftigen Querschnitt der Außenkontur durch einen gemäß der Erfindung ausgeführten Fahrzeugluftreifen für Personenkraftwagen;
Fig. 2 eine Vergrößerung des Schulterbereiches der Fig.1.
Die in der nachfolgenden Beschreibung enthaltenen Werte für Radien und sonstige Abmessungen des Reifens sind auf einen auf einer Felge montierten und unter Nenndruck (Felge und Nenndruck gemäß E.T.R.T.O. Standards) gesetzten Reifen bezogen. Die Formdaten (Abmessungen aus der Vulkanisationsform) weisen im Allgemeinen im Wesentlichen übereinstimmende Abmessungen auf.

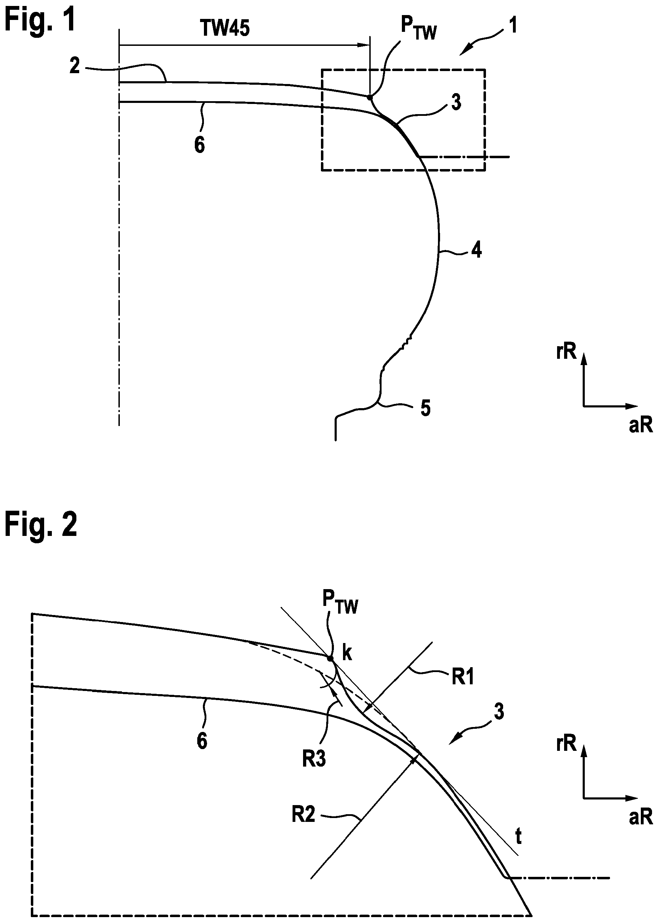

Die Fig. 1 zeigt schematisch einen hälftigen Querschnitt der Außenkontur durch einen gemäß der Erfindung ausgeführten Fahrzeugluftreifen für Personenkraftwagen mit einem Laufstreifen 2, an welchen die Reifenschulter 3, die Seitenwand 4 und der Reifenwulst 5 anschließt. Im Bereich des Laufstreifens 2 und der Reifenschulter 3 ist ebenfalls der Unterkonturzug 6 dargestellt. Der von den gestrichelten Linien eingeschlossene Bereich der Fig. 1 ist in der Fig. 2 vergrößert dargestellt.
Die Breite des Laufstreifens wird über TW45 definiert, mit 70% NW ≤ TW45 ≤ 95% NW, wobei NW die Nennbreite des Reifens ist. Bei einem Reifen der Dimension 205/55R16 ist der vorderste Wert, die 205, die Nennbreite. Von dort an beginnt der Bereich der Reifenschulter 3, welcher bis zur sogenannten Formenteilung reicht. Die Formenteilung ist durch die strichpunktierte Linie angedeutet.

Der Laufstreifen 2 weist eine Breite auf, welche TW45 genannt wird und welche sich zwischen zwei Punkten P_{TW} erstreckt. Jeder dieser Punkte P_{TW} ist der Schnittpunkt einer unter 45° zur Radialen an der Schulteraußenseite verlaufenden Tangente (t) mit einer in Verlängerung der Außenkontur des Laufstreifens 2 verlaufenden Kurve (k). Die Reifenschulteraußenkontur des Standes der Technik ist gestrichelt dargestellt. Erfindungsgemäß bildet diese in Verlängerung der Außenkontur des Laufstreifens 2 verlaufenden Kurve (k) die Außenkontur der Reifenschulter 3 und reicht bis zum Punkt P_{TW}. Von dort geht die Außenkontur zunächst in Richtung Reifenseitenwand in einen konkaven Konturabschnitt über, welcher durch einen Kreisbogenabschnitt mit einem Radius R1 in einem Bereich von 15 - 25 mm gebildet ist. An diesen konkaven Konturabschnitt schließt die übliche konvexe Außenkontur mit R2 an, wobei der konkave Konturabschnitt tangential an die konvexe Außenkontur der Reifenschulter 3 anschließt. Am Punkt P_{TW} ist ein konvexer Kreisbogenabschnitt mit einem Radius R3 in einem Bereich von 1-3 mm ausgebildet.

### Bezugszeichenliste

- 1: Fahrzeugluftreifen für PKW
- 2: Laufstreifen
- 3: Reifenschulter
- 4: Seitenwand
- 5: Reifenwulst
- 6: Unterkonturzug
- R1-3: Radius

## Patentansprüche

1. Fahrzeugluftreifen (1) für PKW in Radialbauart mit einem Laufstreifen (2) und mit einer an dem Übergang zur Reifenseitenwand (4) angeordneten Reifenschulter (3), wobei der Laufstreifen (2) und die Reifenschulter (3) eine am montierten und auf Nenndruck aufgepumpten Reifen (1) zu messende Außenkontur aufweisen und mit einer Breite des Laufstreifens (2), welche TW45 genannt wird und welche sich zwischen zwei Punkten P_{TW} erstreckt, wobei jeder dieser Punkte P_{TW} der Schnittpunkt einer unter 45° zur Radialen an der Schulteraußenseite verlaufenden Tangente (t) mit einer in Verlängerung der Außenkontur des Laufstreifens (2) verlaufenden Kurve (k) ist,
**dadurch gekennzeichnet, dass**
die in Verlängerung der Außenkontur des Laufstreifens (2) verlaufenden Kurve (k) die Außenkontur der Reifenschulter (3) bildet und bis zum Punkt P_{TW} reicht und von dort in Richtung Reifenseitenwand (4) zunächst in einen ausgehend vom Punkt P_{TW} komplett axial außerhalb des Punktes P_{TW} verlaufenden, konkaven Konturabschnitt übergeht, welcher durch einen Kreisbogenabschnitt mit einem Radius (R1) in einem Bereich von 8 - 25 mm gebildet ist und welcher anschließend tangential an die konvexe Außenkontur der Reifenschulter (3) anschließt.

2. Fahrzeugluftreifen nach Anspruch 1, **dadurch gekennzeichnet, dass** am Punkt P_{TW} ein konvexer Kreisbogenabschnitt mit einem Radius (R3) in einem Bereich von 1-3 mm ausgebildet ist.

## Claims

1. Pneumatic vehicle tyre (1) for passenger cars of a radial design with a tread strip (2) and with a tyre shoulder (3) which is arranged at the transition to the tyre sidewall (4), the tread strip (2) and the tyre shoulder (3) having an outer contour to be measured on the tyre (1) which is mounted and is inflated to nominal pressure, and with a width of the tread strip (2), which width is called TW45 and extends between two points P_{TW}, each of the said points P_{TW} being the point of intersection of a tangent (t) which runs on the shoulder outer side at 45° with respect to the radial with a curve (k) which runs in an extension of the outer contour of the tread strip (2), **characterized in that** the curve (k) which runs in an extension of the outer contour of the tread strip (2) forms the outer contour of the tyre shoulder (3) and reaches as far as the point P_{TW} and, from there, merges in the direction of the tyre sidewall (4) first of all into a concave contour section which, starting from the point P_{TW}, runs completely axially outside the point P_{TW}, is formed by way of a circular arc section with a radius (R1) in a range of 8-25 mm, and subsequently tangentially adjoins the convex outer contour of the tyre shoulder (3).

2. Pneumatic vehicle tyre according to Claim 1, **characterized in that** a convex circular arc section with a radius (R3) in a range of 1-3 mm is configured at the point P_{TW}.

## Revendications

1. Pneumatique de véhicule (1), pour véhicules légers, de construction radiale, comprenant une bande de roulement (2) et un épaulement de pneu (3) disposé au niveau de la transition avec la paroi latérale du pneu (4), la bande de roulement (2) et l'épaulement de pneu (3) présentant un contour extérieur devant être mesuré sur le pneu (1) monté et gonflé à une valeur de pression nominale et avec une largeur de la bande de roulement (2), désignée par TW45, et s'étendant entre deux points P_{TW}, chacun de ces points P_{TW} étant le point d'intersection entre une tangente (t), s'étendant à 45° par rapport à la radiale au niveau du côté extérieur de l'épaulement, et une courbe (k) s'étendant dans le prolongement du contour extérieur de la bande de roulement (2),
**caractérisé en ce que**
la courbe (k) s'étendant dans le prolongement du contour extérieur de la bande de roulement (2) forme le contour extérieur de l'épaulement du pneu (3) et s'étend jusqu'au point P_{TW} et se prolonge de là dans la direction de la paroi latérale du pneu (4) d'abord dans une portion de contour concave s'étendant à partir du point P_{TW} complètement axialement à l'extérieur du point P_{TW}, qui est formée par une portion d'arc de cercle de rayon (R1) dans une plage de 8 à 25 mm et qui se raccorde ensuite tangentiellement au contour extérieur convexe de l'épaulement du pneu (3).

2. Pneumatique de véhicule selon la revendication 1, **caractérisé en ce qu'**une portion d'arc de cercle convexe de rayon (R3) dans une plage de 1 à 3 mm est réalisée au niveau du point P_{TW}.
